# EUROPEAN PATENT SPECIFICATION

(11) **EP 0 667 252 B1**
(45) Date of publication and mention of the grant of the patent: **27.05.1998**
(21) Application number: 95101547.8
(22) Date of filing: 06.02.1995
(51) Int. Cl.: B60D 1/46

(54) **A device for rapidly adjusting the heights of tow hitches for towing vehicles to be connected to agricultural tractors**
Vorrichtung zur Schnelleinstellung der Höhe von Anhängevorrichtungen für Fahrzeugen zur Kupplung an landwirtschafliche Schlepper
Moyen de réglage rapide de la hauteur des attelages pour véhicules destinés à être reliés aux tracteurs agricoles

(30) Priority: 09.02.1994 IT BO940051
(43) Date of publication of application: 16.08.1995
(73) Proprietor: CBM S.p.A., 41100 Modena (IT)
(72) Inventor: Cornia, Enrico Maria, I-41100 Modena (IT)
(74) Representative: Provvisionato, Paolo

(56) References cited:
- EP-A- 0 016 317
- EP-A- 0 215 443
- EP-A- 0 388 363
- DE-C- 4 012 586
- DE-U- 9 002 679

## Description

The present invention relates to the field of devices for adjusting the positions of tow hitches for towing vehicles. In particular, the present invention relates to a device for adjusting the height of a tow hitch for a vehicle, particularly an agricultural tractor, of the type indicated in the preamble of Claim 1.

Devices of the aforementioned type are known in which the mounting means for the tow hitch are mounted for sliding on guides fixed to the support assembly. A series of holes aligned vertically on the frame enables the height of the tow hitch to be adjusted by the insertion of a pin in one of the holes in the frame.

Document EP-A-0 388 363 discloses a device according to the preamble of claim 1 for adjusting the position of a tow hitch comprising a carriage mounted for sliding along vertical guides, which can be locked in a certain position by means of two pins movable in opposite directions and operated by a pull-handle which, in the released position of the pins, abuts an handling support so as to allow an operator to support the weight of the carriage while positioning it. In one embodiment of said device, the pins are operated through a gear whose rotation is controlled by the linear movement of the pull-handle.

The object of the present invention is to provide an adjustment device of the aforementioned type which is easy and cheap to produce, which is very reliable and strong in use in the locked condition, even in conditions of heavy loading, and which, at the same time, ensures ease of handling for the operator.

Another object of the invention is to provide a device, the efficiency of which does not decrease over time, particularly in view of its exposure, in use, to difficult environmental conditions and aggressive agents such as oxidizing agents, chemical products, soil, mud, gravel and the like.

In order to achieve the objects indicated above, the subject of the present invention is an adjustment device of the type indicated above, comprising the characteristics indicated in the characterizing part of the following Claim 1.

An advantage of the adjustment device of the present invention is that it requires a single simple movement by the operator for its operation, with consequent benefits in terms of adjustment speed.

Another advantage of the present invention is that it comprises an operating lever which also constitutes a convenient support for the mounting for the hitch when the device is in the released condition.

A further advantage of the device is that the static and dynamic forces exerted by the pulling of the hitch are balanced and are discharged onto very strong elements without affecting the adjustment members which need not therefore be over-dimensioned.

Further characteristics and advantages will become clear from the following detailed description, given with reference to the appended drawings, provided purely by way of non-limiting example, in which:
- Figure 1 is a side view of the assembly comprising an adjustment device according to the present invention,
- Figure 2 is a plan view taken on the arrow II of Figure 1,
- Figure 3 is a section of the detail indicated by the arrow III in Figure 2, on an enlarged scale,
- Figure 4 is a transverse section taken on the line IV-IV of Figure 2,
- Figure 5 is a perspective view of a detail of the device of Figure 1, on an enlarged scale,
- Figure 6 is a view taken on the arrow VI of the detail of Figure 5,
- Figure 7 is a plan view of a variant of the adjustment device, and
- Figure 8 is a view taken on the arrow VIII of Figure 7.

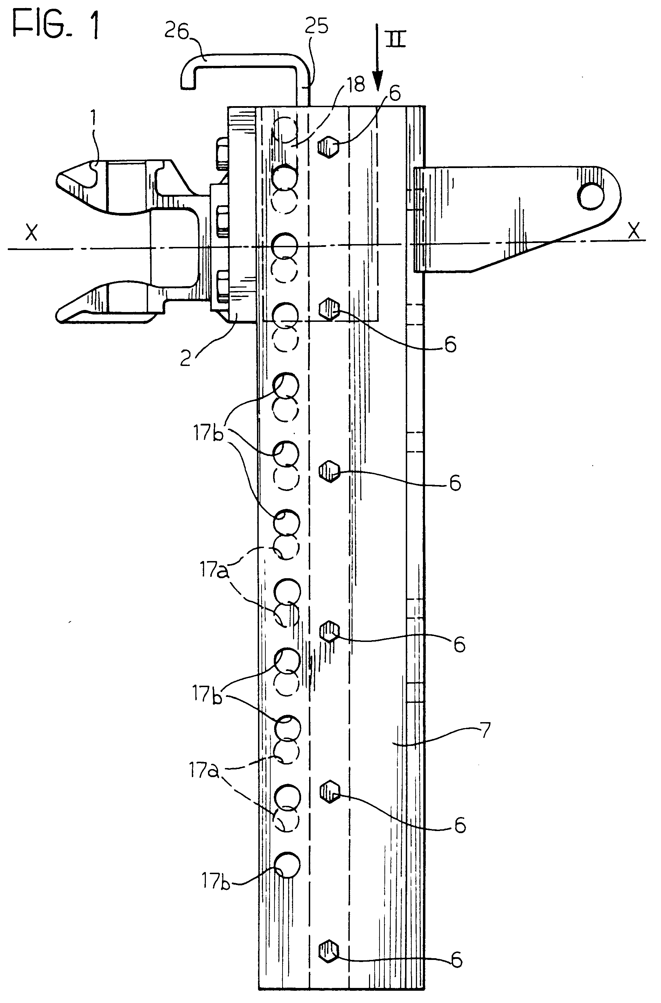

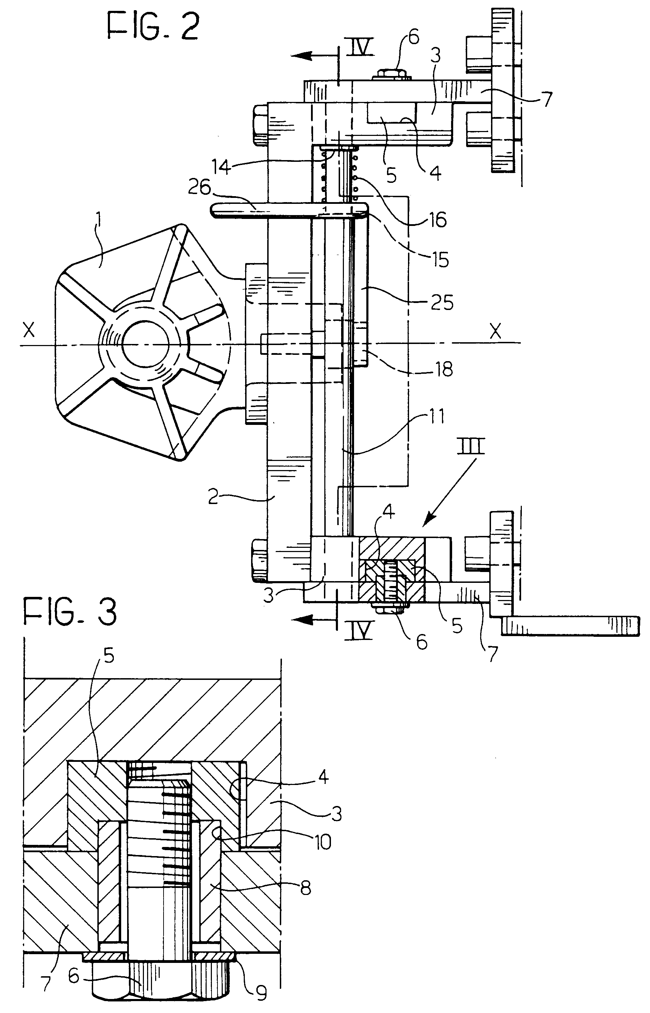

With reference now to Figures 1, 2 and 4, a tow hitch 1 of generally known type, particularly of the type which is pivotable about an axis X-X substantially parallel to the direction of travel of an agricultural tractor, is mounted on a mounting plate 2, to the sides of which two elongate channelled guides 3, each having a vertical channel 4 with a U-shaped cross-section, are fixed.

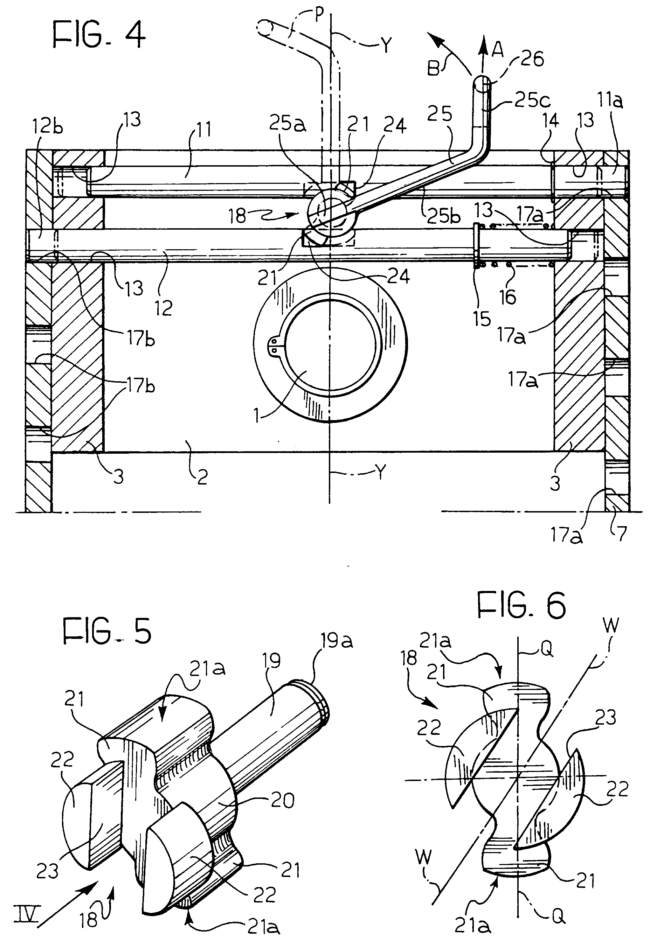

The channelled guides 3 are mounted for sliding vertically on vertical guide tracks 5 of substantially rectangular cross-section, which are fixed, by means of a series of screws 6, to plates 7 of a support structure mounted on the rear portion of a tractor (not shown). Figure 3 shows in detail the mounting of the tracks 5 on the plates 7, comprising a centring bush 8 inserted in a through hole 9 in the plate 7 and in a corresponding blind hole 10 in the rectangular track 5. Naturally, the fixing system is given by way of example and may be replaced by any other equivalent movable or fixed connection system. The advantage of the use of a movable system for fixing the tracks 5 to the plates 7 is that the tracks 5 can easily be replaced when worn.

Two cylindrical pins 11, 12 mounted between the two channelled guides 3 have axes lying in a plane perpendicular to the axis X-X. The ends of the cylindrical pins 11, 12 are inserted in through-holes 13 in the channelled guides 3. The lengths of the cylindrical pins 11, 12 are substantially equal to or slightly less than the distance between the outer faces of the channelled guides 3.

Naturally, the pins 11, 12 are not limited to the cylindrical shape and may be replaced by any other equivalent member such as elongated pin members having square or polygonal cross-section. In this case, the shape of the holes 13 - or, generally speaking, of the apertures - will vary accordingly.

A Seeger stop ring 14 is mounted near an end 11a of the upper cylindrical pin 11 (on the right-hand side in Figure 4); the distance between the end 11a of the pin and the ring is substantially equal to the sum of the thicknesses of a guide 3 and of a plate 7 in the section of Figure 4. A helical spring 16, the function of which, like the function of the ring 14, will be described further below, is interposed between a check ring 15 mounted on the lower cylindrical pin 12 and the inner wall of the right-hand channelled guide 3.

Each of the support plates 7 has a row of vertical holes, indicated 17a, 17b respectively, with reference to the right-hand and left-hand plates in Figure 4. The holes 17a, 17b have diameters equal to or slightly greater than the diameters of the holes 13 and their axes lie in the plane defined by the axes of the cylindrical pins 11, 12. The distances between the holes 17a or 17b disposed on the same plate 7 determine the resolution of the height adjustment of the hitch 1; the closer the holes 17a, 17b are together, the finer can be the adjustment of the height of the hitch 1. Naturally, the distances between the holes 17a or 17b need not necessarily be identical for each pair of holes but may vary according to specific adjustment requirements. For each hole 17a on the right-hand plate 7 in Figure 4 there is a corresponding hole 17b on the left-hand plate 7, the axis of which is spaced vertically from the axis of the corresponding hole 17a by a distance equal to the distance between the axes of the cylindrical pins 11, 12.

A butterfly-shaped operating element 18 is mounted rotatably with its axis parallel to the axis X-X in a hole in a central region of the mounting plate 2 above the region in which the hitch 1 is supported. In greater detail, as shown in Figures 5 and 6, the butterfly element 18 has a cylindrical shank 19 which is intended to be inserted in the hole in the plate 2, and is prevented from coming out by a Seeger ring engaged in an annular recess 19a.

Two radially-opposed wings 21, the outermost surfaces 21a of which have arcuate cross-sections, extend from a main, substantially cylindrical body 20 of the butterfly element 18. The main body 20 is extended on the opposite side to the shank 19, by a cylindrical drum 22 in which there is a longitudinal groove 23 the median plane, marked W-W in Figure 6, of which is inclined to the longitudinal plane of symmetry of the wings 21, marked Q-Q. As shown in Figure 4, the wings 21 of the butterfly element 18 engage in two notches 24 in respective central regions of the cylindrical pins 11, 12. The end 25a of an operating lever 25, which terminates in a grip 26, is mounted in the longitudinal groove 23.

In the locked condition of the device of Figures 1 to 6, shown in continuous outline in Figure 4, the plane of symmetry Q-Q of the wings 21 of the butterfly element 18 has been rotated through about 30° clockwise from the vertical so that the right-hand end 11a of the upper cylindrical pin 11 engages one of the holes 11a in the right-hand plate 7 and the left-hand end 12b of the lower cylindrical pin 12 engages a corresponding hole 17b in the left-hand plate 7. This locked position is maintained by the pressure of the spring 16 and the operating lever 25 shows a first portion 25b which is inclined towards the right in Figure 4 and a second portion 25c which points upwards so that the grip 26 is displaced horizontally from the vertical plane marked Y-Y passing through the axis of the butterfly element 18.

The stop ring 14 is in abutment with the inner wall of the right-hand plate 7 so as to prevent the cylindrical pins 11, 12 from coming out. In the locked condition, a pull on the tow hitch 1 along the axis X-X does not stress the cylindrical pins 11, 12 in their seats 13, 17a, 17b, since the forces are borne by the coupling of the channelled guides 3 with the tracks 5 and consequently by the plates 7 fixed to the tractor.

In order to adjust the height of the tow hitch 1, the operator grips the grip 26 and exerts an upward pull in the direction of the arrow A of Figure 4. Since the grip 26 is eccentric relative to the axis of rotation of the butterfly element 18, the pulling of the grip 26 pivots the lever 25 anticlockwise (arrow B of Figure 4) bringing it to the position P, shown in chain line in Figure 4. The pivoting of the lever 25 rotates the butterfly element 18, the wings 21 of which are brought to the positions indicated in chain line, in which the median plane Q-Q has rotated through about 30° anticlockwise relative to the plane Y-Y. The wings 21 entrain the cylindrical pins 11, 12 in linear sliding movements in opposite directions, releasing their ends 11a and 12b from the holes respective 17a and 17b. The position P of the lever 25 represents a limit position beyond which it cannot pivot since at least one of the pins 11, 12 is in abutment with the inner wall of one of the plates 7. The position of the lever 25 which is likely to be reached after the release of the adjustment device is in any case less angled than shown in Figure 4 since the weights of the hitch 1, of the mounting plate 2 and of the pins 11, 12 are balanced by the operator's pull on the grip 26 when it lies in the plane Y-Y.

By acting on the grip 26 directly, the operator is free to move the tow hitch vertically until he finds the desired pair of corresponding holes 17a, 17b. The movement of the grip in the sense opposite that indicated by the arrow B, which is facilitated by the pressure of the spring 16, locks the adjustment device in the new position.

The thickness of the plates 7 in the section of Figure 4 must be less than the thickness of the channelled guides 3, since, in the locked condition shown, although the cylindrical pins 11, 12 penetrate the holes 17a, 17b, they must, however, be supported at both ends by the holes 13 in the channelled guides 3.

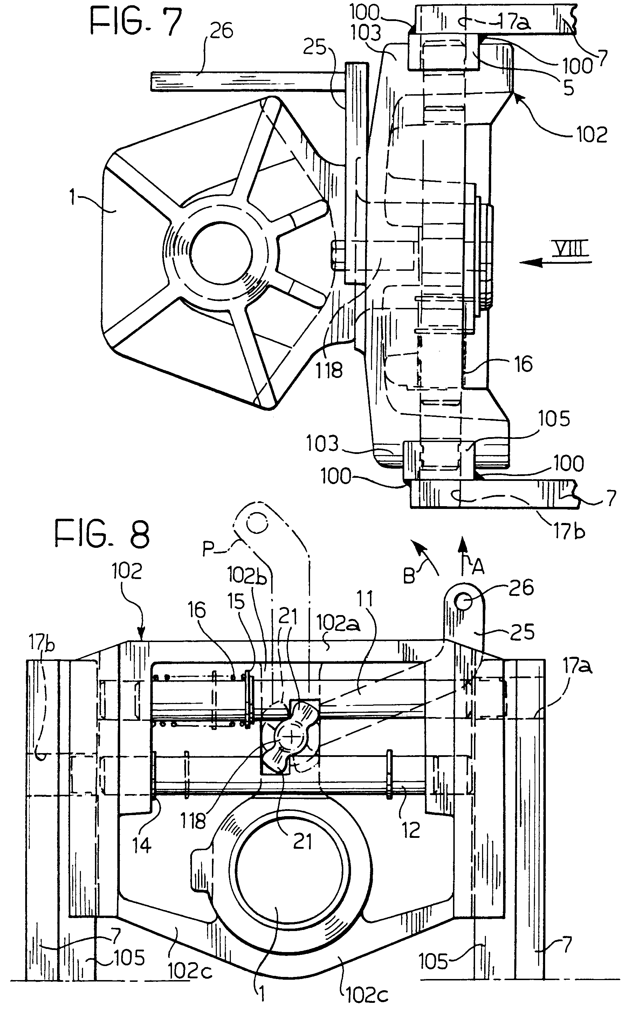

A variant of the adjustment device described above is shown in Figures 7 and 8 in which the same reference numerals have been used for the same components as in the preceding drawings.

In this variant, the plate 2 is replaced by a mounting body 102 with variable geometry, on which the channelled guides 103 are formed integrally. Guide tracks 105 are fixed to the plates 7 by welds 100 and have holes corresponding to the holes 17a, 17b in the plates 7. An alternative could consist of the use of a removable mounting for the tracks 105, similar to the mounting shown in Figure 3 for the tracks 5, naturally with provision for the screws 6 to be positioned between the pairs of holes 17a, 17b.

The mounting body 102 comprises an upper cross-member 102a, from the central region of which a vertical arm 102b extends to support a butterfly element 118 and, together with two lower tracks 102c, the tow hitch 1. The shank of the butterfly element 118 extends rearwardly, to the left in Figure 7, so as to project relative to the mounting body 2, for the keying of the lever 25.

## Claims

1. A device for adjusting the height of a tow hitch for a vehicle, particularly an agricultural tractor, comprising:
- a main support assembly including at least two facing guide elements (5, 7, 105) parallel to a predetermined direction of sliding which, in the condition of use of the adjustment device, is substantially vertical,
- mounting means (2, 102) for a tow hitch (1), disposed at least partially between the two guide elements (5, 7, 105) and mounted for sliding relative to the support assembly in the direction of sliding, and
- selectively releasable locking means (11, 12) for fixing the position of the mounting means (2, 102) relative to the main support assembly,
the main support assembly comprises at least a first and a second row of apertures (17a, 17b) associated with the at least two guide elements (5, 7, 105), respectively, the apertures of each row being aligned in the direction of sliding, the locking means comprising at least first and second check means (11, 12) mounted movably on the mounting means (2, 102), the adjustment device also comprising operating means (18, 25, 26, 118) for simultaneously moving the at least first and second check means (11, 12) selectively from a first, release position in which sliding of the mounting means relative to the support assembly is permitted, to a second, locking position in which the first and second check means (11, 12) engage at least one aperture (17a, 17b) of the first and second rows of apertures, respectively, the operating means comprising an actuator body (18, 118) mounted for pivoting on the mounting means (2, 102), and engagement means (21, 24), connecting the actuator body (18, 118) to the check means (11, 12),
characterized in that the engagement means comprise two opposed appendages (21) fixed firmly to the actuator body (18, 118) and constantly engaging two corresponding recesses (24) in the first and second check means (11, 12), respectively, to entrain the check means (11, 12) in linear sliding movements in opposite direction from the second, locking position, to the first, release position thereof.

2. A device according to Claim 1, characterized in that the check means comprise two pins (11, 12) movable in opposite directions and having parallel axes perpendicular to the direction of sliding.

3. A device according to Claim 2, characterized in that the actuator body (18, 118) is mounted for pivoting on the mounting means (2, 102) about an axis perpendicular to the plane defined by the axes of the movable pins and equidistant from these axes.

4. A device according to Claim 1, characterized in that the operating means comprise an operating lever (25) including a grip (26), for supporting the weight of the mounting means (2, 102) and of the hitch (1) when the check means are in the first release position in the condition of use of the adjustment device.

5. A device according to Claim 1, characterized in that it also comprises resilient means (16) for resiliently forcing the check means (11, 12) from the first, release position to the second, locking position and for keeping them in the second, locking position after the de-activation of the selective operating means.

6. A device according to Claim 1, characterized in that each of the two guide elements comprises a straight track (5, 105) which is oriented in the direction of sliding and on which a corresponding channelled element (3, 103) associated with the mounting means is mounted for sliding.

7. A device according to Claim 6, characterized in that the rows of apertures (17a, 17b) are formed at a certain distance from the tracks (5, 105).

8. A device according to Claim 6, characterized in that the rows of apertures (17a, 17b) are formed in positions corresponding to the positions of the tracks (5, 105).

9. A device according to Claim 6, characterized in that the tracks (5, 105) are connected releasably to the support assembly (7).

10. A device according to Claim 2 and 6, characterized in that the lengths of the pins (11, 12) are substantially equal to or slightly less than the distance between outer faces of the channelled elements (3, 103).

## Patentansprüche

1. Vorrichtung zur Einstellung der Höhe einer Anhängevorrichtung eines Fahrzeuges, insbesondere eines landwirtschaftlichen Schleppers, mit
- einer Hauptabstützvorrichtung mit zumindest zwei Planführungselementen (5, 7, 105) parallel zu einer vorbestimmten Gleitrichtung, die, im Falle des Gebrauchs der Justiervorrichtung, im wesentlichen vertikal verläuft,
- Montagemitteln (2, 102) für eine Anhängevorrichtung (1), die zumindest teilweise zwischen den beiden Planführungselementen (5, 7, 105) angeordnet und relativ zu der Abstützvorrichtung in der Gleitrichtung verschiebbar befestigt sind, und
- mit selektiv entriegelbaren Haltemitteln (11, 12), um die Position der Montagemittel (2, 102) relativ zu der Hauptabstützvorrichtung festzulegen, wobei
die Hauptabstützvorrichtung zumindest eine erste und eine zweite Reihe von Öffnungen (17a, 17b) enthält, die jeweils den zumindest zwei Führungselementen (5, 7, 105) zugeordnet sind, und die Öffnungen einer jeden Reihe in der Gleitrichtung ausgerichtet sind, wobei die Haltemittel (11 12) zumindest erste und zweite Anschlagmittel (11, 12) enthalten, die beweglich auf den Montagemitteln montiert sind, wobei die Einstellvorrichtung des weiteren Betätigungsmittel (18, 25, 26, 118) enthält zur simultanen Bewegung der zumindest ersten und zweiten Anschlagmittel (11, 12) wahlweise von einer ersten Auslöseposition, in der ein Gleiten der Montagemittel relativ zu den Abstützvorrichtung zugelassen ist, zu einer zweiten Halteposition, in der die ersten und zweiten Anschlagmittel (11, 12) in zumindest eine Öffnung (17a, 17b) der ersten beziehungsweise zweiten Reihe der Öffnungen eingreifen, wobei die Betätigungsmittel ein Verstellteil (18, 118), das drehbar auf dem Montagemittel (2, 102) befestigt ist, und Verzahnungsmittel (21, 24), die das Verstellteil (18, 118) mit den Anschlagmitteln (11, 12) verbindet, aufweisen, **dadurch gekennzeichnet**, daß die Verzahnungsmittel zwei gegenüberliegende Anformungen (21) enthalten, die fest mit dem Verstellteil (18, 118) verbunden sind und ständig mit zwei korrespondierende Ausnehmungen (24) in den ersten beziehungsweise zweiten Anschlagmitteln (11, 12) in Eingriff stehen, um die Anschlagmittel (11, 12) in linearen Gleitbewegungen in entgegengesetzter Richtung von der zweiten, Halteposition, zu der ersten, Auslöseposition, mitzunehmen.

2. Vorrichtung nach Anspruch 1, **dadurch gekennzeichnet**, daß die Anschlagmittel zwei in entgegengesetzter Richtung bewegbare Bolzen (11, 12) mit zur Gleitrichtung senkrechten, parallelen Achsen aufweisen.

3. Vorrichtung nach Anspruch 2, **dadurch gekennzeichnet**, daß das Verstellteil (18, 118) drehbar auf den Montagemitteln (2, 102) befestigt ist und die Achse senkrecht zu der Fläche steht, die durch die Achsen der beweglichen Bolzen festgelegt und äquidistant zu diesen ist.

4. Vorrichtung nach Anspruch 1, **dadurch gekennzeichnet**, daß die Betätigungsmittel einen Betätigungshebel (25) mit einem Griff (26) enthalten, um das Gewicht der Montagemittel (2, 102) und der Anhängevorrichtung (1) aufzunehmen, wenn die Anschlagmittel sich in der ersten Auslöseposition im Gebrauchsfall der Justiervorrichtung befinden.

5. Vorrichtung nach Anspruch 1, **dadurch gekennzeichnet**, daß Spannmittel (16) zur Kraftbeaufschlagung der Anschlagmittel (11, 12) aus der ersten Auslöseposition zur zweiten Halteposition vorgesehen sind und um sie in der zweiten Halteposition nach der Deaktivierung der selektiven Betätigungsmittel zu halten.

6. Vorrichtung nach Anspruch 1, **dadurch gekennzeichnet**, daß jedes der zwei Führungselemente eine gerade Führung (5, 105) aufweist, die in Gleitrichtung ausgerichtet ist und auf der ein entsprechendes, gefurchtes Element (3, 103), das mit den Montagemitteln verbunden ist, gleitbar befestigt ist.

7. Vorrichtung nach Anspruch 6, **dadurch gekennzeichnet**, daß die Reihen der Öffnungen (17a, 17b) in einem festgelegten Abstand von den Führungen (5, 105) ausgebildet sind.

8. Vorrichtung nach Anspruch 6, **dadurch gekennzeichnet**, daß die Reihen der Öffnungen (17a, 17b) in Positionen ausgebildet sind, die mit den Positionen der Führungen (5, 105) korrespondieren.

9. Vorrichtung nach Anspruch 6, **dadurch gekennzeichnet**, daß die Führungen (5, 105) lösbar mit der Abstützeinrichtung (7) verbunden ist.

10. Vorrichtung nach den Ansprüchen 2 und 6, **dadurch gekennzeichnet**, daß die Länge der Bolzen (11, 12) im wesentlichen gleich oder geringfügig kürzer als der Abstand der Außenflächen der gefurchten Elemente (3, 103) ist.

## Revendications

1. Un dispositif de réglage de la hauteur d'un attelage pour un véhicule, en particulier un tracteur agricole, comprenant :
- un ensemble support principal comprenant au moins deux éléments de guidage (5, 7, 105) placés l'un en face de l'autre, parallèlement à une direction prédéterminée de coulissement qui, dans les conditions d'utilisation du dispositif de réglage, est sensiblement verticale,
- des moyens de montage (2, 102) destinés à un attelage (1), disposés au moins partiellement entre les deux éléments de guidage (5, 7, 105) et montés pour permettre un coulissement par rapport à l'ensemble support dans la direction du coulissement, et
- des moyens de verrouillage (11, 12) à désolidarisation sélective, conçus pour fixer la position des moyens de montage (2, 102) par rapport à l'ensemble support principal,
- l'ensemble support principal comprenant au moins une première et une deuxième rangée d'ouvertures (17a, 17b) associées aux au moins deux éléments de guidage (5, 7, 105) respectivement, les ouvertures de chaque rangée étant alignées dans la direction du coulissement, les moyens de verrouillage comprenant au moins des premier et deuxième moyens de contrôle (11, 12) montés de façon déplaçable sur les moyens de montage (2, 102), le dispositif de réglage comprenant également des moyens d'actionnement (18, 25, 26, 118) prévus pour simultanément déplacer les au moins premier et deuxième moyens de contrôle (11, 12) sélectivement, d'une première position de désolidarisation dans laquelle le coulissement des moyens de montage par rapport à l'ensemble de support est autorisé, à une deuxième position de verrouillage dans laquelle les premier et deuxième moyens de contrôle (11, 12) viennent en contact avec au moins une ouverture (17a, 17b) des première et deuxième rangées d'ouvertures, respectivement, le moyen d'actionnement comprenant un corps actionneur (18, 118) monté à pivotement sur les moyens de montage (2, 102) et des moyens de mise en prise (21, 24) reliant le corps d'actionneur (18, 118) aux moyens de contrôle (11, 12),
caractérisé en ce que les moyens de mise en prise comprennent deux appendices (21) opposés, fixés fermement au corps d'actionneur (18, 118) et assurant en permanence la mise en prise de deux cavités (24) correspondantes sur les premier et deuxième moyens de contrôle (11, 12), respectivement, afin d'entraîner les moyens de contrôle (11, 12) en des déplacements coulissants linéaires dans une direction opposée, avec passage de la deuxième position, de verrouillage, à la première position, de désolidarisation, de ceux-ci.

2. Un dispositif selon la revendication 1, caractérisé en ce que les moyens de contrôle comprennent deux tiges (11, 12) déplaçables en des directions opposées et ayant des axes parallèles, perpendiculaires à la direction du coulissement.

3. Un dispositif selon la revendication 2, caractérisé en ce que le corps d'actionneur (18, 118) est monté à pivotement sur les moyens de montage (2, 102) autour d'un axe perpendiculaire au plan défini par les axes des tiges déplaçables et équidistant de ces axes.

4. Un dispositif selon la revendication 1, caractérisé en ce que les moyens d'actionnement comprennent un levier d'actionnement (25) comprenant une poignée (26), conçu pour supporter le poids des moyens de montage (2, 102) et de l'attelage (1) lorsque les moyens de contrôle se trouvent dans la première position de désolidarisation dans l'état d'utilisation du dispositif de réglage.

5. Un dispositif selon la revendication 1, caractérisé en ce qu'il comprend également des moyens élastiques (16) conçus pour forcer de façon élastique les moyens de contrôle (11, 12) à passer de la première position, de désolidarisation, à la deuxième position, de verrouillage, et pour les maintenir dans la deuxième position, de verrouillage après la désactivation des moyens d'actionnement sélectifs.

6. Un dispositif selon la revendication 1, caractérisé en ce que chacun des deux éléments de guidage comprend une piste rectiligne (5, 105), orientée dans la direction du coulissement et sur laquelle un élément formant canal (3, 103) correspondant, associé aux moyens de montage, est monté à coulissement.

7. Un dispositif selon la revendication 6, caractérisé en ce que les rangées d'ouvertures (17a, 17b) sont formées à une certaine distance des pistes (5, 105).

8. Un dispositif selon la revendication 6, caractérisé en ce que les rangées d'ouvertures (17a, 17b) sont formées en des positions correspondant aux positions des pistes (5, 105).

9. Un dispositif selon la revendication 6, caractérisé en ce que les pistes (5, 105) sont reliées de façon désolidarisable à l'ensemble support (7).

10. Un dispositif selon les revendications 2 et 6, caractérisé en ce que les longueurs des tiges (11, 12) sont sensiblement égales ou légèrement inférieures à la distance existant entre des faces extérieures des éléments formant canaux (3, 103).
